# FASCICULE DE BREVET EUROPEEN

(11) **EP 4 045 360 B1**
(45) Date de publication et mention de la délivrance du brevet: **29.05.2024**
(21) Numéro de dépôt: 20789978.2
(22) Date de dépôt: 13.10.2020
(51) Int. Cl.: B60Q 5/00

(54) **DISPOSITIF D'AVERTISSEUR SONORE DE VOLANT DE VÉHICULE**
FAHRZEUG-LENKRADHUPE
VEHICLE STEERING WHEEL HORN DEVICE

(30) Priorité: 18.10.2019 FR 1911724
(43) Date de publication de la demande: 24.08.2022
(73) Titulaire: Autoliv Development AB, 447 83 Vårgårda (SE)
(72) Inventeur: BARRITAULT, Matthis, 86000 Poitiers (FR); LETIERCE, Thomas, 86580 Vouneuil s/Biard (FR)
(74) Mandataire: Novagraaf International SA
(86) Numéro de dépôt international: PCT/EP2020/078691
(87) Numéro de publication internationale: WO 2021/074103

(56) Documents cités:
- EP-A2- 1 099 604
- DE-C- 948 216
- FR-A1- 3 063 942
- FR-A1- 3 071 453
- JP-A- 2017 197 185

## Description

La présente invention concerne de manière générale le domaine des avertisseurs sonores de véhicule automobile, et en particulier, l'invention concerne le domaine des avertisseurs sonores embarqués dans le volant du véhicule.

Il est connu dans l'art antérieur de proposer des avertisseurs sonores avec des dispositifs de commande intégrés au volant, tels que celui décrit par exemple dans le document FR3063942, comprenant une pièce de commande mobile à pousser par un utilisateur pour déclencher le fonctionnement de l'avertisseur sonore. En contrepartie, ce système impose de prévoir de multiples branchements manuels avec le circuit de bord du véhicule pour alimenter le circuit électrique de commande d'avertisseur sonore comprenant un ou plusieurs interrupteurs. Typiquement, il faut prévoir au moins deux branchements manuels par interrupteur, car il y a deux broches de connexion par interrupteur à connecter au circuit de bord.

Il est important toutefois de détecter le déplacement de la pièce de commande le plus rapidement possible, quelque soit la partie poussée par le conducteur, ce qui peut conduire à la multiplication d'interrupteurs répartis sous toute la surface de la pièce de commande. Quelque soit la partie poussée, un interrupteur à proximité détectera alors le mouvement et pourra déclencher le fonctionnement. Cependant, une telle mise en oeuvre conduit encore à la multiplication de points de branchement manuels. Le procédé de fabrication requiert alors de nombreuses opérations manuelles de branchement, ce qui augmente le temps de fabrication, le nombre potentiel d'erreurs, et le coût total.

Un but de la présente invention est de répondre aux inconvénients de l'art antérieur mentionnés ci-dessus et en particulier, tout d'abord, de proposer un dispositif d'avertisseur sonore qui comprend un dispositif de commande efficace pour détecter rapidement un mouvement d'une pièce de commande à actionner par un utilisateur, et qui présente toutefois un procédé d'assemblage simple, avec un nombre limité de branchements à effectuer.

A cet effet, l'invention est définie par la revendication 1. Un premier aspect de l'invention concerne un dispositif d'avertisseur sonore de véhicule automobile (ou un dispositif de commande d'avertisseur sonore), comprenant :
- une pièce de base,
- une pièce de commande, mobile par rapport à la pièce de base, entre une position de repos et une position enfoncée,
- un circuit électrique de détection de commande avec au moins deux interrupteurs, chaque interrupteur étant agencé pour changer d'état lors du passage de la pièce de commande de la position de repos vers la position enfoncée,

dans lequel les interrupteurs sont des interrupteurs normalement fermés lorsque la pièce de commande est en position de repos,
caractérisé:
   - en ce que lesdits au moins deux interrupteurs sont montés en série,
   - en ce que chaque interrupteur comprend deux contacts isolés l'un de l'autre et agencés sur la pièce de base, et un pont de contact agencé sur la pièce de commande, le pont de contact étant agencé pour connecter les deux contacts lors de la fermeture dudit au moins un interrupteur.

Selon la mise en oeuvre ci-dessus, les interrupteurs sont connectés en série, ce qui procure une détection immédiate d'un changement d'état (le circuit total est ouvert dés lors qu'un seul des interrupteurs est ouvert). De plus, chacun des interrupteurs comprend un pont embarqué sur la pièce de commande et deux contacts embarqués sur la pièce de base, les contacts étant agencés pour être connecté/déconnectés par le pont, ce qui, en conjonction avec la connexion en série, supprime au moins un branchement à effectuer par l'opérateur de montage (puisque par construction, le circuit présente des interrupteurs en série).

Avantageusement, le circuit électrique de détection peut comprendre trois interrupteurs. La détection est efficace, car trois interrupteurs répartis sur le volant permettent de détecter tout mouvement de la pièce de commande, et en raison de l'architecture en série, le nombre de branchements à effectuer par l'opérateur de montage n'est pas augmenté, à savoir, uniquement deux bornes de connexions sont nécessaires.

Selon l'invention, chaque interrupteur comprend deux contacts isolés l'un de l'autre sur la pièce de base et un pont de contact sur la pièce de commande, le pont de contact étant agencé pour connecter les deux contacts lors de la fermeture dudit au moins un interrupteur. En conjonction avec l'architecture en série, seuls deux branchements manuels sont à prévoir avec cette mise en oeuvre.

Avantageusement, le circuit électrique de détection peut comprendre uniquement deux bornes de connexion à un réseau électrique de bord du véhicule. Autrement dit, un opérateur de fabrication n'a que deux branchements manuels à effectuer lors du montage du volant, même s'il y a plusieurs interrupteurs de détection du mouvement de la pièce de commande.

Avantageusement, chaque interrupteur peut présenter un contact connecté avec un contact d'un interrupteur adjacent du circuit de détection de commande.

selon l'invention, le circuit de détection de commande comprend une branche composée de brins de circuit, avec au moins deux brins de circuit adjacents comprenant chacun à une extrémité un des contacts d'un même interrupteur, les contacts isolés l'un de l'autre étant agencés en regard du pont de contact dudit interrupteur. La branche est donc un composant unique qui comprend plusieurs brins de circuits qui relient en série chaque interrupteur, et il suffit de prévoir deux bornes de connexion pour permettre deux branchements manuels. Ainsi le système est très simple à fabriquer, mais permet de prévoir de multiples interrupteurs pour procurer une détection de commande sensible et efficace. Autrement dit, la branche en question est une portion du circuit électrique de détection de commande et peut être définie de la manière suivante : entre deux points de connexion (ou deux noeuds) du circuit électrique, la branche comprend plusieurs conducteurs (des brins de circuit ou de conducteur) qui relient deux à deux un contact d'un interrupteur à un contact d'un autre interrupteur.

Avantageusement la branche peut être formée d'une feuille métallique emboutie ou d'un fil métallique plié.

Selon l'invention, la branche peut former un cerceau ou arceau de connexion, et le cerceau ou l'arceau de connexion forme une pièce indépendante à fixer sur le volant. En d'autres termes, le cerceau ou l'arceau de connexion embarque tous les contacts de chacun des interrupteurs et les brins de circuit qui les relient, pour former une pièce d'un seul tenant aisée à manipuler pour les opérateurs de montage.

Avantageusement, la branche peut comprendre un matériau isolant formant un substrat supportant les contacts isolés l'un de l'autre agencés en regard du pont de contact dudit interrupteur.

Avantageusement, la branche peut comprendre au moins une coque isolante partiellement surmoulée autour des contacts isolés l'un de l'autre agencés en regard du pont de contact dudit interrupteur.

Avantageusement, le dispositif d'avertisseur sonore peut comprendre au moins une protubérance de référence, et la coque isolante peut comprendre des moyens de retenue ou d'emboîtement élastiques, agencés pour se fixer élastiquement sur la protubérance de référence. Selon la mise en oeuvre ci-dessus, le montage est rapide et simple, car la protubérance de référence procure un indexage sur ou autour duquel l'opérateur enfile ou emboîte la coque isolante. La protubérance peut être une tête de vis, en particulier une tête de vis épaulée qui procure par ailleurs une portion de guidage de la pièce de commande.

Selon une mise en oeuvre le dispositif d'avertisseur sonore peut comprendre plusieurs protubérances de référence, et la coque isolante peut comprendre des moyens de retenue ou d'emboîtement élastiques, agencés pour se fixer élastiquement sur chacune des protubérances de référence, et de préférence selon une même direction de montage.

Par exemple, on peut prévoir que chaque coque isolante soit en forme de C ou avec un col ouvert avec typiquement une ouverture pour s'emboîter sur chaque protubérance de référence, et l'ouverture de chaque interface de fxation est dirigée dans la même direction. Ceci permet un montage d'un seul geste, sans déformer le cerceau.

Avantageusement, le dispositif d'avertisseur sonore peut comprendre au moins une unité de guidage de la pièce de commande, l'unité de guidage comprenant au moins une butée mécanique pour définir la position de repos, et:
- le pont de contact est embarqué sur la pièce de commande,
- les deux contacts isolés sont solidaires de la butée mécanique.

Avantageusement, le dispositif d'avertisseur sonore peut comprendre autant d'unités de guidage que d'interrupteurs, et pour chaque interrupteur :
- le pont de contact est embarqué sur la pièce de commande,
- les deux contacts isolés sont solidaires de la butée mécanique d'une unité de guidage.

Le guidage de la pièce de commande est précis, puisque plusieurs unités de guidage sont prévues, et la détection de la commande est très efficace, car un interrupteur est prévu au niveau de chaque unité de guidage.

Avantageusement, les deux contacts isolés solidaires de la butée mécanique peuvent être isolé électriquement de l'unité de guidage.

Un deuxième aspect de l'invention concerne un volant de véhicule comprenant un dispositif d'avertisseur sonore selon le premier aspect.

Avantageusement, le volant de véhicule peut comprendre un module de sécurité fixé sur la pièce de commande.

Un troisième aspect de l'invention concerne un véhicule automobile comprenant un volant de véhicule selon le deuxième aspect.

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
[Fig. 1] représente une vue en perspective d'une partie d'un dispositif d'avertisseur sonore, ou d'une partie d'un dispositif de commande d'avertisseur sonore, embarqué sur un volant de véhicule ;
[Fig. 2] représente un cerceau de connexion faisant partie du dispositif d'avertisseur sonore de la figure 1,
[Fig. 3] représente le cerceau de connexion de la figure 2, pour montrer une interaction avec des composants de la figure 1 ;
[Fig. 4] représente une coupe du dispositif d'avertisseur sonore de la figure 1 ;
[Fig. 5] représente une vue en perspective d'une alternative non couverte par l'invention revendiquée d'une partie d'un dispositif d'avertisseur sonore, embarqué sur un volant de véhicule ;
[Fig. 6] représente un cerceau de connexion faisant partie du dispositif d'avertisseur sonore alternatif de la figure 5 non couvert par l'invention revendiquée,
[Fig. 7] représente une coupe du dispositif d'avertisseur sonore de la figure 5 non couvert par l'invention revendiquée;
Fig. 8] représente une mise en oeuvre alternative du cerceau de connexion de la figure 2.

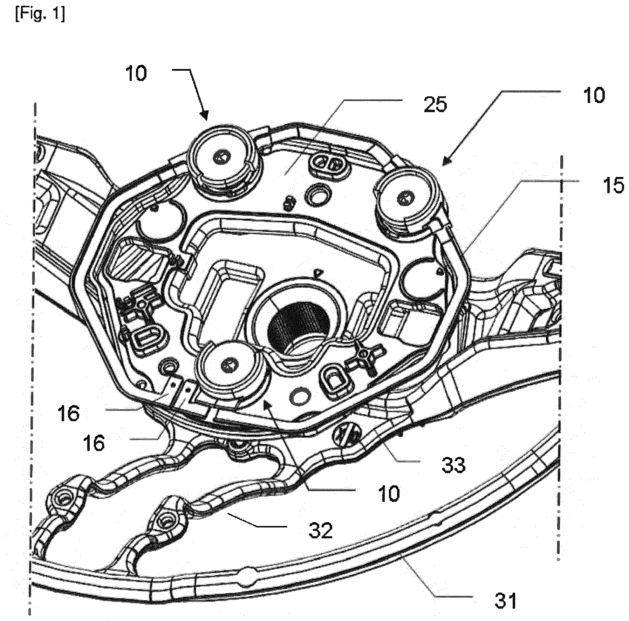

La figure 1 représente une vue en perspective d'une partie d'un dispositif d'avertisseur sonore comprenant trois interrupteurs 10 formés au niveau de trois unités de guidage d'une pièce de commande 25 mobile et embarquée sur un volant de véhicule comprenant notamment une armature composée d'un moyeu (formant une pièce de base 33), de branches 32 et d'une jante 31.

La pièce de commande 25 est une platine qui reçoit typiquement un module de sécurité (un coussin gonflable ou airbag), et qui est montée mobile sur le moyeu de l'armature du volant. De manière conventionnelle, la pièce de commande 25 est mobile entre une position de repos (figure 1) et une position enfoncée; lorsque le conducteur veut actionner l'avertisseur sonore.

Afin de détecter ce mouvement de commande, le dispositif d'avertisseur sonore comprend trois interrupteurs 10 normalement fermés (lorsque la pièce de commande 25 est en position de repos), et qui s'ouvrent lors du passage vers la position enfoncée. Ainsi, la détection est rapide (le changement d'état des interrupteurs 10 se produit dès que la pièce de commande 25 quitte la position de repos).

Afin de limiter les opérations manuelles de branchement, il est prévu de relier les trois interrupteurs 10 en série, ce qui permet de ne prévoir que deux cosses de connexion 16 pour relier les interrupteurs 10 au reste du circuit de bord du véhicule.

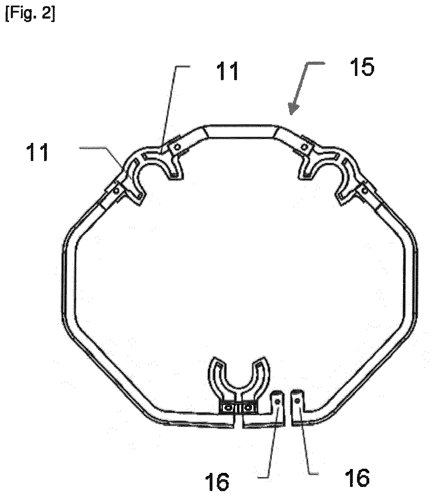

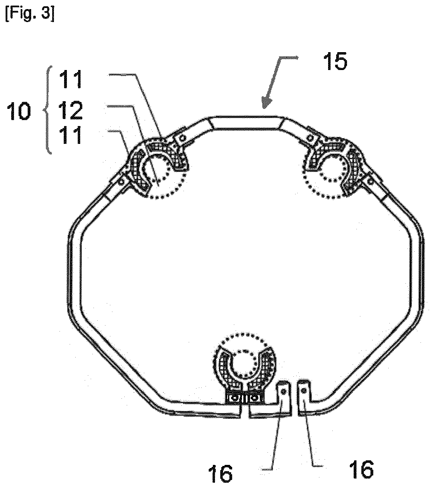

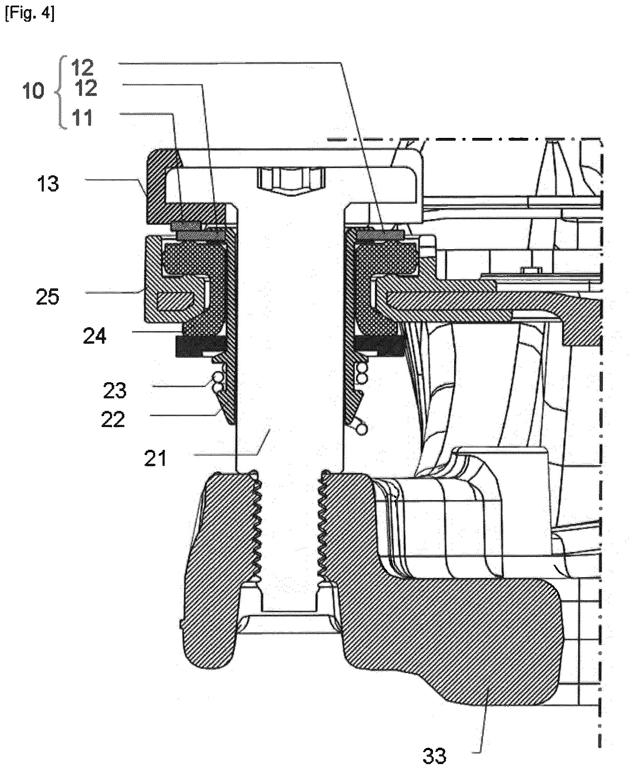

Dans le détail, comme représenté figures 2 et 3, chaque interrupteur 10 comprend deux contacts 11, isolés l'un de l'autre. De plus, il est prévu un pont de contact 12 (visible figure 3 et surtout figure 4) agencé pour relier les deux contacts 11 entre eux, lorsque l'interrupteur 10 est fermé. En conséquence, il est possible de prévoir un cerceau de connexion 15 détaillé figures 2 et 3, qui relie deux à deux les contacts 11 de deux interrupteurs 10, et qui comprend les deux seules bornes de connexion 16 à brancher manuellement lors de l'assemblage du volant de véhicule. La figure 3 montre en pointillés la silhouette du pont de contact 12 de chaque interrupteur 10, et les zones de contact électrique en hachuré, lorsque les interrupteurs 10 sont fermés (pièce de commande 25 en position de repos donc).

Le cerceau de connexion 15 comprend donc les contacts 11 de chaque interrupteur 10, et il est également prévu une collerette 13 au niveau des contacts 11 et bien visible figure 4 (qui représente une coupe ou niveau d'une unité de guidage de la pièce de commande 25), qui vient s'emboîter élastiquement sur la tête d'une vis de guidage 21 vissée dans le moyeu de l'armature. Ainsi la fixation du cerceau de connexion 15 est aisée sur le volant.

On peut noter au surplus que le cerceau de connexion est monté fixe sur le moyeu, il ne bouge donc pas lors des commandes d'avertisseur sonore, et il est moins exposé aux vibrations, ce qui limite les sollicitations mécaniques / vibratoire et les risques de bruit. La durée de vie est améliorée. En conséquence, seuls les ponts de contact 12 sont mobiles dans cette mise en oeuvre, et aucun câble électrique n'est mobile, ce qui d'une manière générale améliore la fiabilité (réduction des risques de bruit, de frottement, de déplacement intempestif...).

Par ailleurs, la figure 4 montre le détail de constructions des unités de guidage de la pièce de commande 25 qui est mobile. Autour de la vis de guidage 21 épaulée, il est prévu un ressort de rappel 23, un coulisseau 22, et un amortisseur 24 pour guider la pièce de commande 25.

De retour à la figure 1, on peut noter que trois unités de guidage sont prévues, avec à chaque fois un interrupteur 10, ce qui garantit que la détection de déplacement de la pièce de commande 25 sera immédiatement détectée, quelque soit l'endroit où pousse le conducteur, car les interrupteurs 10 sont normalement fermés et tous reliés en série : dès qu'un des interrupteurs 10 s'ouvre, tout le circuit est ouvert. De plus, il n'y a que deux bornes de connexion 16 à brancher manuellement lors du montage du volant représenté.

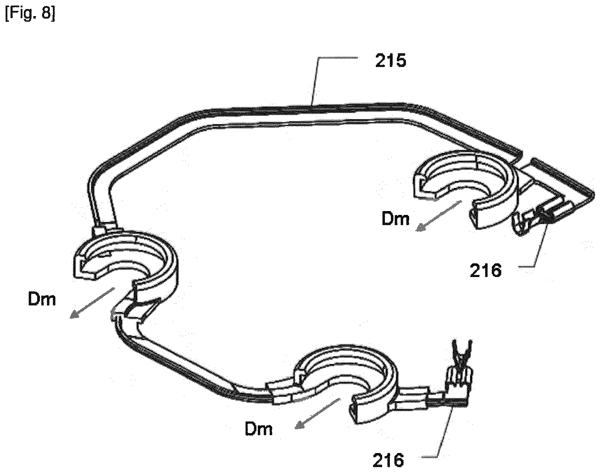

La figure 8 montre une alternative de réalisation du cerceau 15 de la figure 2. En effet, le cerceau 215 de la figure 8 peut tout à fait remplacer le cerceau 15 de la figure 2 dans le montage de la figure 1 ou 4. La différence à noter se situe au niveau des coques qui surmoulent les contacts de chaque interrupteur.

En effet, chaque coque est en forme de C (comme sur la figure 2), mais ici figure 8, les ouvertures de chaque C sont orientées toutes dans une même direction de montage Dm. Un montage simplifié est alors possible. On peut fixer le cerceau 215 sur les vis épaulées selon un seul mouvement dans la direction de montage Dm.

On peut aussi prévoir de monter toutes les vis de guidage 21 épaulées et la pièce de commande 25 sur la pièce de base 33 pour ensuite fixer le cerceau 215 et le connecter via les bornes de connexion 216. Dans l'exemple représenté, la direction de montage Dm est contenue dans un plan perpendiculaire aux vis de guidage 21 épaulées, mais on peut prévoir d'autres orientations et directions de montage.

Il est à noter que les contacts 11 du cerceau 215 ne sont pas visibles sur la figure 8, car ils sont agencés au niveau de la surface inférieure des coques ou surmoulages isolants, qui est cachée sur cette figure 8.

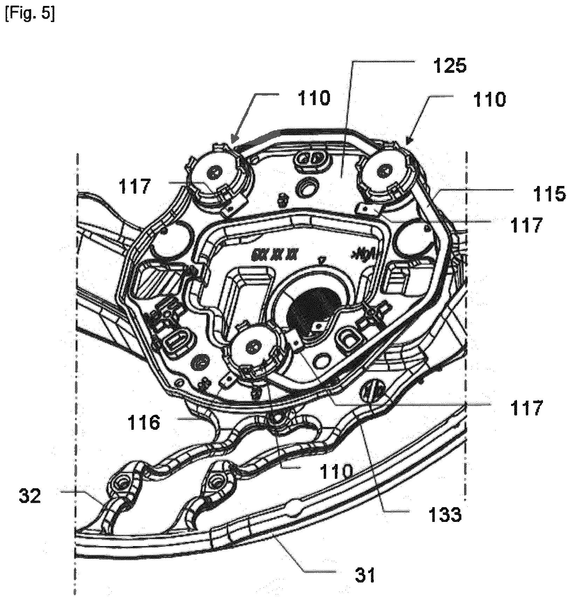

Les figures 5, 6 et 7 représentent une alternative de réalisation non couverte par l'invention revendiquée. Une pièce de commande 125 est montée mobile sur trois unités de guidage qui portent chacune un interrupteur 110.

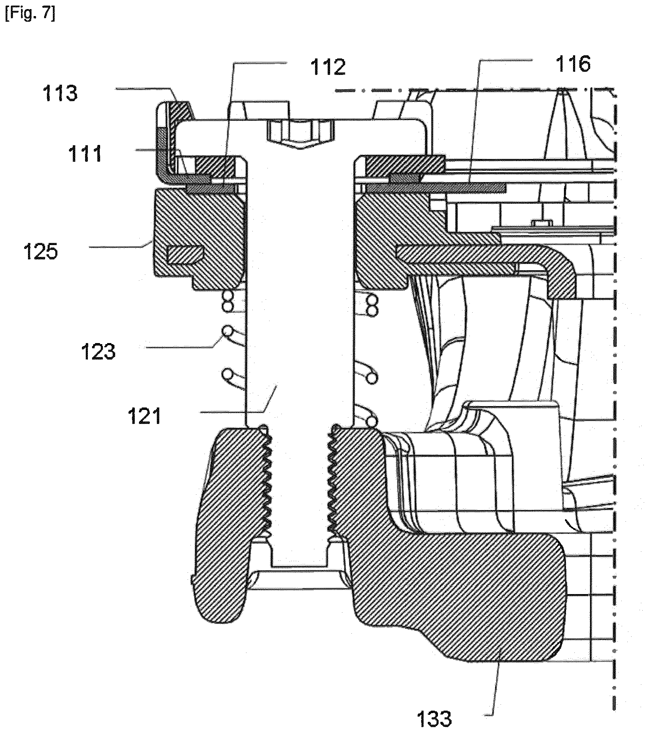

Comme montré figure 7, chaque unité de guidage est ici composée d'une vis de guidage 121, qui forme une glissière pour la pièce de commande 125, et un ressort 123 est monté entre le moyeu (la pièce de base 133) et la pièce de commande 125 pour le repousser en position de repos (vers le haut, comme représenté en figure 7).

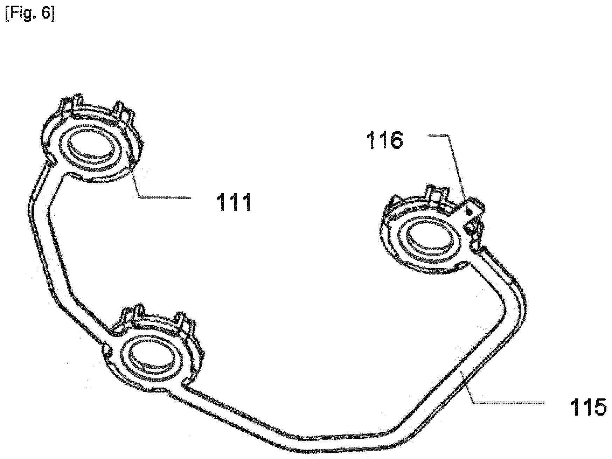

De plus, chaque interrupteur 110 comprend un contact fixe 111 solidaire d'une tête d'une vis de guidage 121 et un contact mobile 112 solidaire de la pièce de commande 125. Un cerceau de connexion 115 visible figure 6 relie en série les contacts fixes 111, ce qui permet de ne prévoir qu'une seule borne de connexion 116 pour les trois contacts fixes 111. Par ailleurs, figure 4 et 7, on peut voir que chaque contact mobile présente une borne de connexion 116. Au total dans ce mode de réalisation, quatre bornes de connexion 116 sont à brancher manuellement (au lieu de six si chaque interrupteur présentait deux bornes de connexion, comme connu dans l'art antérieur).

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Dispositif d'avertisseur sonore de véhicule automobile, comprenant :
• une pièce de base (33),
• une pièce de commande (25), mobile par rapport à la pièce de base (33), entre une position de repos et une position enfoncée,
• un circuit électrique de détection de commande avec au moins deux interrupteurs (10), chaque interrupteur (10) étant agencé pour changer d'état lors du passage de la pièce de commande (25) de la position de repos vers la position enfoncée,
dans lequel les interrupteurs (10) sont des interrupteurs (10) normalement fermés lorsque la pièce de commande (25) est en position de repos,
**caractérisé**:
- **en ce que** les deux interrupteurs (10) sont montés en série,
- **en ce que** chaque interrupteur (10) comprend deux contacts (11) isolés l'un de l'autre et agencés sur la pièce de base (33), et un pont de contact (12) agencé sur la pièce de commande (25), le pont de contact (12) étant agencé pour connecter les deux contacts (11) lors de la fermeture dudit au moins un interrupteur (10)
- **en ce que** le circuit de détection de commande comprend une branche formant un arceau de connexion, et comprenant tous les contacts de chacun des interrupteurs et des brins de circuit adjacents comprenant chacun à une extrémité un des contacts (11) d'un même interrupteur, les contacts (11) isolés l'un de l'autre étant agencés en regard du pont de contact (12) dudit interrupteur (10), l'arceau de connexion formant une pièce indépendante à fixer sur le volant.

2. Dispositif d'avertisseur sonore selon la revendication 1, dans lequel le circuit électrique de détection comprend trois interrupteurs (10).

3. Dispositif d'avertisseur sonore selon la revendication 1 ou 2, dans lequel chaque interrupteur (10) présente un contact connecté avec un contact d'un interrupteur (10) adjacent du circuit de détection de commande.

4. Dispositif d'avertisseur sonore selon l'une des revendications 1 à 3, dans lequel la branche comprend un matériau isolant formant un substrat supportant les contacts (11) isolés l'un de l'autre et agencés en regard du pont de contact (12) dudit interrupteur (10).

5. Dispositif d'avertisseur sonore selon l'une des revendications 1 à 4, dans lequel la branche comprend au moins une coque isolante partiellement surmoulée autour des contacts (11) isolés l'un de l'autre et agencés en regard du pont de contact (12) dudit interrupteur (10).

6. Dispositif d'avertisseur sonore selon la revendication 5, comprenant au moins une protubérance de référence, et dans lequel la coque isolante comprend des moyens de retenue ou d'emboîtement élastiques, agencés pour se fixer élastiquement sur la protubérance de référence.

7. Dispositif d'avertisseur sonore l'une des revendications 1 à 6, comprenant au moins une unité de guidage de la pièce de commande (25), l'unité de guidage comprenant au moins une butée mécanique pour définir la position de repos, et dans lequel :
• le pont de contact (12) est embarqué sur la pièce de commande (25),
• les deux contacts isolés (11) sont solidaires de la butée mécanique.

8. Dispositif d'avertisseur sonore selon la revendication 7, comprenant autant d'unités de guidage que d'interrupteurs (10), et dans lequel, pour chaque interrupteur (10) :
• le pont de contact (12) est embarqué sur la pièce de commande (25),
• les deux contacts isolés (11) sont solidaires de la butée mécanique d'une unité de guidage.

9. Dispositif d'avertisseur sonore selon l'une des revendications 7 ou 8, dans lequel les deux contacts isolés (11) solidaires de la butée mécanique sont isolés électriquement de l'unité de guidage.

10. Volant de véhicule comprenant un dispositif d'avertisseur sonore selon l'une des revendications 1 à 9.

11. Volant de véhicule selon la revendication 10, comprenant un module de sécurité fixé sur la pièce de commande (25).

12. Véhicule automobile comprenant un volant de véhicule selon l'une des revendications 10 ou 11.

## Patentansprüche

1. Hupenvorrichtung für ein Fahrzeug, umfassend:
• ein Basisteil (33),
• ein Steuerteil (25), das relativ zu dem Basisteil (33) zwischen einer Ruhestellung und einer eingedrückten Stellung bewegbar ist,
• eine elektrische Steuerungserfassungsschaltung mit mindestens zwei Schaltern (10), wobei jeder Schalter (10) zum Ändern eines Zustands bei dem Übergang des Steuerteils (25) aus der Ruhestellung in die eingedrückte Stellung angeordnet ist, wobei die Schalter (10) normalerweise geschlossene Schalter (10) sind, wenn sich das Steuerteil (25) in der Ruhestellung befindet, **gekennzeichnet dadurch:**
- **dass** die zwei Schalter (10) in Reihe geschaltet sind,
- **dass** jeder Schalter (10) zwei voneinander isolierte und auf dem Basisteil (33) angeordnete Kontakte (11) und eine auf dem Steuerteil (25) angeordnete Kontaktbrücke (12) umfasst, wobei die Kontaktbrücke (12) zum Verbinden der zwei Kontakte (11) angeordnet ist, wenn der mindestens eine Schalter (10) geschlossen ist
- **dass** die Steuerungserfassungsschaltung einen Zweig umfasst, der einen Verbindungsbügel ausbildet,
umfassend alle Kontakte jedes der Schalter und angrenzende Schaltungsstränge, umfassend jeweils an einem Ende einen der Kontakte (11) eines gleichen Schalters, wobei die voneinander isolierten Kontakte (11) gegenüber der Kontaktbrücke (12) des Schalters (10) angeordnet sind, wobei der Verbindungsbügel ein unabhängiges Teil ausbildet, das an dem Lenkrad zu fixieren ist.

2. Hupenvorrichtung nach Anspruch 1, wobei die elektrische Erfassungsschaltung drei Schalter (10) umfasst.

3. Hupenvorrichtung nach Anspruch 1 oder 2, wobei jeder Schalter (10) einen Kontakt aufweist, der mit einem Kontakt eines angrenzenden Schalters (10) der Steuerungserfassungsschaltung verbunden ist.

4. Hupenvorrichtung nach einem der Ansprüche 1 bis 3, wobei der Zweig ein isolierendes Material umfasst, das ein Substrat ausbildet, das die voneinander isolierten und gegenüber der Kontaktbrücke (12) des Schalters (10) angeordneten Kontakte (11) trägt.

5. Hupenvorrichtung nach einem der Ansprüche 1 bis 4, wobei der Zweig mindestens eine isolierende Schale umfasst, die teilweise um die voneinander isolierten und gegenüber der Kontaktbrücke (12) des Schalters (10) angeordneten Kontakte (11) herum umspritzt ist.

6. Hupenvorrichtung nach Anspruch 5, umfassend mindestens einen Referenzvorsprung, und wobei die isolierende Schale elastische Halte- oder Einpassmittel umfasst, die zum elastischen Fixiertwerden an dem Referenzvorsprung angeordnet sind.

7. Hupenvorrichtung nach einem der Ansprüche 1 bis 6, umfassend mindestens eine Führungseinheit für das Steuerteil (25), die Führungseinheit umfassend mindestens einen mechanischen Anschlag zum Definieren der Ruhestellung, und wobei:
• die Kontaktbrücke (12) an Bord des Steuerteils (25) ist,
• die zwei isolierten Kontakte (11) mit dem mechanischen Anschlag fest verbunden sind.

8. Hupenvorrichtung nach Anspruch 7, umfassend so viele Führungseinheiten wie Schalter (10), und wobei für jeden Schalter (10):
• die Kontaktbrücke (12) an Bord des Steuerteils (25) ist,
• die zwei isolierten Kontakte (11) mit dem mechanischen Anschlag einer Führungseinheit fest verbunden sind.

9. Hupenvorrichtung nach einem der Ansprüche 7 oder 8, wobei die zwei isolierten Kontakte (11), die mit dem mechanischen Anschlag fest verbunden sind, von der Führungseinheit elektrisch isoliert sind.

10. Fahrzeuglenkrad, umfassend eine Hupenvorrichtung nach einem der Ansprüche 1 bis 9.

11. Fahrzeuglenkrad nach Anspruch 10, umfassend ein Sicherheitsmodul, das an dem Steuerteil (25) fixiert ist.

12. Kraftfahrzeug, umfassend ein Fahrzeuglenkrad nach einem der Ansprüche 10 oder 11.

## Claims

1. An acoustic warning device for a motor vehicle, comprising:
• a base part (33),
• a control part (25), which is movable with respect to the base part (33) between a rest position and a pressed position,
• an electrical control detection circuit having at least two switches (10), each switch (10) being arranged to change state during the passage of the control part (25) from the rest position to the pressed position, the switches (10) normally being closed switches (10) when the control part (25) is in the rest position, **characterized**:
- **in that** the two switches (10) are mounted in series,
- **in that** each switch (10) comprises two contacts (11) that are isolated from one another and arranged on the base part (33), and a contact bridge (12) arranged on the control part (25), the contact bridge (12) being arranged to connect the two contacts (11) when said at least one switch (10) is closed,
- **in that** the control detection circuit comprises a branch forming a connecting arch,
comprising all the contacts of each of the switches and adjacent circuit strands each comprising at one end one of the contacts (11) of the same switch, the contacts (11) that are isolated from each other being arranged opposite the contact bridge (12) of said switch (10), the connecting arch forming an independent part to be attached to the steering wheel.

2. The acoustic warning device according to claim 1, wherein the electrical detection circuit comprises three switches (10).

3. The acoustic warning device according to either claim 1 or claim 2, wherein each switch (10) has a contact connected to a contact of an adjacent switch (10) of the control detection circuit.

4. The acoustic warning device according to any of claims 1 to 3, wherein the branch comprises an isolating material forming a substrate supporting the contacts (11) that are isolated from one another and arranged opposite the contact bridge (12) of said switch (10).

5. The acoustic warning device according to any of claims 1 to 4, wherein the branch comprises at least one isolating shell partially overmolded around the contacts (11) that are isolated from one another and arranged opposite the contact bridge (12) of said switch (10).

6. The acoustic warning device according to claim 5, comprising at least one reference protuberance, and wherein the isolating shell comprises resilient retaining or interlocking means, arranged so as to be resiliently attached to the reference protuberance.

7. The acoustic warning device according to any of claims 1 to 6, comprising at least one guide unit for the control part (25), the guide unit comprising at least one mechanical stop for defining the rest position, and wherein:
• the contact bridge (12) is embedded on the control part (25),
• the two isolated contacts (11) are rigidly connected to the mechanical stop.

8. The acoustic warning device according to claim 7, comprising as many guide units as switches (10), and wherein, for each switch (10):
• the contact bridge (12) is embedded on the control part (25),
• the two isolated contacts (11) are rigidly connected to the mechanical stop of a guide unit.

9. The acoustic warning device according to either claim 7 or claim 8, wherein the two isolated contacts (11) rigidly connected to the mechanical stop are electrically isolated from the guide unit.

10. A vehicle steering wheel comprising an acoustic warning device according to any of claims 1 to 9.

11. The vehicle steering wheel according to claim 10, comprising a safety module attached to the control part (25).

12. A motor vehicle comprising a vehicle steering wheel according to either claim 10 or claim 11.
